# EUROPÄISCHE PATENTANMELDUNG

(11) **EP 0 968 977 A1**
(43) Veröffentlichungstag der Anmeldung: **05.01.2000**
(21) Anmeldenummer: 99890191.2
(22) Anmeldetag: 15.06.1999
(51) Int. Cl.: C04B 26/02, C04B 14/06, E01C 11/10, C09K 3/10

(54) **Fugenmasse zum Ausgiessen von Rissen oder Fugen in Strassenbelägen**

(30) Priorität: 22.06.1998 AT 107098
(71) Anmelder: Mauhart, Alois, 4053 Pucking (AT)
(72) Erfinder: Mauhart, Alois, 4053 Pucking (AT)
(74) Vertreter: Hübscher, Heiner, Dipl.-Ing.

(57) **Zusammenfassung**

Es wird eine Fugenmasse (3) zum Ausgießen von Rissen (2) oder Fugen in Straßenbelägen (1) beschrieben. Um vorteilhafte mechanische Eigenschaften für die Fugenmasse zu erreichen, wird vorgeschlagen, daß sie aus einer Mischung einer pastösen Komponente aus einer allenfalls mit mineralischen Füllstoffen und Additiven versetzten Dispersion eines copolymeren Kunstharzes mit einer Trockenkomponente aus Zement und Quarzsand besteht, dessen Grobkornanteil einen mittleren Durchmesser kleiner 3 mm aufweist und dessen die Haftreibung bestimmender Kornanteil mit einem mittleren Korndurchmesser gößer 0,2 mm 6 bis 40 % des Gesamtgewichtes der Mischung beträgt.

## Beschreibung

Die Erfindung bezieht sich auf eine Fugenmasse zum Ausgießen von Rissen oder Fugen in Straßenbelägen.

Da Straßenbeläge vergleichsweise großen Temperaturschwankungen ausgesetzt sind, müssen Risse oder Fugen in den Straßenbelägen mit einer Fugenmasse ausgegossen werden, die ausreichend elastisch ist, um Wärmedehnungen der angrenzenden Straßenbelagabschnitte aufnehmen zu können. Außerdem ist eine gute haftfeste und wasserdichte Verbindung zu den angrenzenden Belagabschnitten zu fordern, was insbesondere bei Asphaltbelägen zu Fugenmassen auf Bitumenbasis führt. Die Fugenmassen auf Bitumenbasis haben jedoch den wesentlichen Nachteil, daß sie mit zunehmender Temperatur weicher werden, was die Verkehrssicherheit von Straßenbelägen herabsetzt, deren Risse mit Fugenmassen auf Bitumenbasis ausgegossen werden. Außerdem können solche Fugenmassen keine ausreichende Haftreibung bieten, was insbesondere Zweiradfahrer gefährden kann. Dazu kommt eine vergleichsweise aufwendige Verarbeitung, weil Fugenmassen auf Bitumenbasis zunächst erwärmt werden müssen, bevor sie in die zu schließenden Risse oder Fugen eingebracht werden können.

Der Erfindung liegt somit die Aufgabe zugrunde, eine Fugenmasse der eingangs geschilderten Art so auszugestalten, daß eine von der Temperaturbelastung des Straßenbelages weitgehend unabhängige mechanische Belastbarkeit durch den Straßenverkehr sichergestellt werden kann, ohne die Aufnahme der Wärmedehnungen der angrenzenden Belagabschnitte zu gefährden. Außerdem soll eine gute Haftreibung und eine einfache Verarbeitbarkeit gewährleistet werden.

Die Erfindung löst die gestellte Aufgabe dadurch, daß sie aus einer Mischung einer pastösen Komponente aus einer allenfalls mit mineralischen Füllstoffen und Additiven versetzten Dispersion eines copolymeren Kunstharzes mit einer Trockenkomponente aus Zement und Quarzsand besteht, dessen Grobkornanteil einen mittleren Durchmesser kleiner 3 mm aufweist und dessen die Haftreibung bestimmender Kornanteil mit einem mittleren Korndurchmesser gößer 0,2 mm 6 bis 40 % des Gesamtgewichtes der Mischung beträgt.

Durch das Zusammenwirken eines copolymeren Kunstharzes mit Zement als Bindemittel für den Quarzsand können in vorteilhafter Weise die elastischen Eigenschaften des Kunstharzes mit den Festigkeitseigenschaften des abgebundenen Zementes verbunden werden, was eine auch bei höheren Temperaturen ausreichend feste Fugenmasse ergibt, deren Elastizität die Aufnahme von Wärmedehnungen der anschließenden Belagabschnitte erlaubt. Der Quarzsandanteil mit einem mittleren Korndurchmesser größer als 0,2 mm stellt eine gute Haftreibung sicher, wobei die Begrenzung des Grobkornanteiles auf einen mittleren Korndurchmesser kleiner als 3 mm das Vergießen auch schmaler Risse oder Fugen erlaubt. Da die erfindungsgemäße Fugenmasse aus einer Mischung einer pastösen Komponente mit einer Trockenkomponente besteht, brauchen zur Herstellung der Fugenmasse lediglich die beiden Komponenten vermischt zu werden, bevor die so hergestellte Fugenmasse verarbeitet werden kann. Die Komponenten können dabei in entsprechenden Gebinden angeliefert werden, die dann nur vor Ort miteinander vermischt zu werden brauchen.

Wird der Grobkornanteil des Quarzsandes auf einen mittleren Korndurchmesser kleiner 1,2 mm beschränkt, so wird einerseits das elastische Verhalten der Fugenmasse vorteilhaft beeinflußt und anderseits die Verarbeitbarkeit der Fugenmasse verbessert, ohne die Haftreibung zu gefährden. Die Haftreibung wird insbesondere durch den Kornanteil bestimmt, dessen mittlerer Durchmesser zwischen 0,6 und 1,2 mm liegt, so daß es sich empfiehlt, den die Haftreibung bestimmenden Kornanteil des Quarzsandes auf einen mittleren Durchmesser von 0,6 mm nach unten zu beschränken. Selbstverständlich hängt die Haftreibung der Fugenmasse auch vom Anteil des die Haftreibung bestimmenden Kornanteils des Quarzsandes an der Fugenmasse ab. Obwohl ein Gewichtsanteil dieser Quarzsandkörnung zwischen 6 und 40 % am Gesamtgewicht der Mischung gute Ergebnisse sicherstellt, ohne die Festigkeit oder die notwendige Elastizität der Fugenmasse zu gefährden, kann bei einem Gewicht des die Haftreibung bestimmenden Kornanteils des Quarzsandes von 15 bis 25 % ein optimaler Ausgleich zwischen der notwendigen Haftreibung, der Elastizität und der mechanischen Festigkeit erreicht werden. Besonders günstige Verhältnisse werden in diesem Zusammenhang bei einem Gewichtsanteil von 18 % des die Haftreibung bestimmenden Kornanteils des Quarzsandes an der Gesamtmischung erzielt.

Die mechanische Eigenschaften der Fugenmassen hängt unter anderem vom Verhältnis des Kunstharzes und des Zementes in der Mischung ab, da ja der Kunstharzanteil die Elastizität der Fugenmasse beeinflußt, während der Zementanteil für die Festigkeit bestimmend ist. Über das gewählte Verhältnis zwischen dem Kunstharz- und dem Zementanteil können somit auch die Fugenmassen an sehr unterschiedliche Verhältnisse angepaßt werden. Da der Bindemittelanteil zur Bindung des Quarzsandes in einem bestimmten Bereich vorgegeben ist, bedingen unter diesen Voraussetzungen ein höherer Gewichtsanteil der Trokkenkomponente eine härtere und ein höherer Gewichtsanteil der pastösen Komponente eine elastischere Fugenmasse. Die Eigenschaften der späteren Fugenmasse können daher in einfacher Weise durch eine Abstimmung der Anteile der pastösen Komponente und der Trockenkomponente aufeinander eingestellt werden. Weist die Trockenkomponente einen Gewichtsanteil von 50 bis 70 % der Gesamtmischung auf, so werden den meisten Anforderungen genügende Voraussetzungen geschaffen. Die besten Ergebnisse konnten in diesem Zusammenhang bei einem Gewichtsanteil der Trockenkomponente an der Gesamtmischung von 60 bis 65 % erzielt werden, wobei von einer Trockenkomponente ausgegangen wurde, bei der der für die Haftreibung bestimmende Quarzsandanteil 30 Gew.% und der Zementanteil 70 Gew.% betrug.

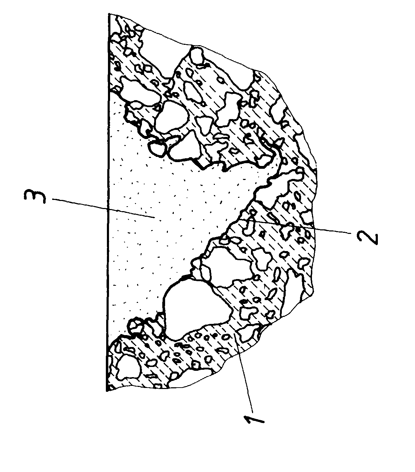

In der Zeichnung ist der Erfindungsgegenstand beispielsweise dargestellt, und zwar wird ein mit einer erfindungsgemäßen Fugenmasse ausgegossener Riß eines Straßenbelages schematisch in einem Querschnitt gezeigt.

Gemäß dem dargestellten Ausführungsbeispiel ist in einem Straßenbelag 1 aus Asphalt ein Riß 2 mit einer Fugenmasse 3 auszufüllen. Zu diesem Zweck wird der Riß 2 von losen Teilchen befreit und gereinigt, um die Vorraussetzungen für einen flüssigkeitsdichten Verschluß des Risses 2 zu sorgen. Die Fugenmasse 3 wird vor dem Ausfüllen des Risses 2 aus zwei Komponenten zusammengemischt, einer pastösen Komponente und einer Trockenkomponente. Die pastöse Komponente besteht aus einer wäßrigen Dispersion eines copolymeren Kunstharzes, der Additive, beispielsweise Entschäumer, Verdichtungsmittel, Konservierungsmittel u. dgl., und feinkörnige mineralischen Füllstoffe zugesetzt sind, um eine vorgegebene Viskosität sicherzustellen. Die Trockenkomponente enthält Quarzsand und Zement, und zwar bevorzugt in einem Gewichtsverhältnis von 30 % Quarzsand und 70 % Zement. Die mittlere Korngröße des Quarzsandes soll in einem Bereich zwischen 0,6 bis 1,2 mm liegen. Nach dem Mischen der beiden Komponenten in einem üblichen Verhältnis von 60 bis 65 Gewichtsanteilen der Trockenkomponente und 40 bis 35 Gewichtsanteilen der pastösen Komponente wird eine teigige Fugenmasse erhalten, die einfach in den Riß 2 eingebracht werden kann. Das Mischen der beiden Komponenten, die entsprechend dem bevorzugten Mischungsverhältnis in Gebinden abgepackt sein können, kann maschinell mit Hilfe von Schneckenpumpen erfolgen, um die gemischte Fugenmasse über Düsen in den Riß 2 einzuspritzen. Das Mischen der Komponenten und das Einstreichen der Fugenmasse in den Riß 2 kann aber selbstverständlich auch händisch erfolgen. Die Viskosität der Fugenmasse kann mit Hilfe von Wasser bei Bedarf nachträglich eingestellt werden. Die Abbindezeit ist von den Temperaturverhältnissen und der Luftfeuchtigkeit abhängigkeit. Die vollständige Abbindung erfolgt nach 3 bis 4 Wochen. Die Fugenmasse ist allerdings bereits nach fünf Stunden befahrbar.

Untersuchungen eines mit einer erfindungsgemäßen Fugenmasse ausgefüllten Risses eines Straßenbelages aus Asphalt haben ergeben, daß die in den Riß eingefüllte Fugenmasse den Riß 2 vollständig ausfüllt und eine ausreichende Flankenhaftung aufweist. Es konnten keine nennenswerten Unter- oder Überfüllungen bzw. Substanzverluste festgestellt werden.

## Patentansprüche

1. Fugenmasse (3) zum Ausgießen von Rissen (2) oder Fugen in Straßenbelägen (1), dadurch gekennzeichnet, daß sie aus einer Mischung einer pastösen Komponente aus einer allenfalls mit mineralischen Füllstoffen und Additiven versetzten Dispersion eines copolymeren Kunstharzes mit einer Trockenkomponente aus Zement und Quarzsand besteht, dessen Grobkornanteil einen mittleren Durchmesser kleiner 3 mm aufweist und dessen die Haftreibung bestimmender Kornanteil mit einem mittleren Korndurchmesser gößer 0,2 mm 6 bis 40 % des Gesamtgewichtes der Mischung beträgt.

2. Fugenmasse nach Anspruch 1, dadurch gekennzeichnet, daß der Grobkornanteil des Quarzsandes einen mittleren Korndurchmesser kleiner 1,2 mm aufweist.

3. Fugenmasse nach Anspruch 1 oder 2, dadurch gekennzeichnet, daß der die Haftreibung bestimmende Kornanteil des Quarzsandes einen mittleren Durchmesser größer als 0,6 mm aufweist.

4. Fugenmasse nach einem der Ansprüche 1 bis 3, dadurch gekennzeichnet, daß das Gewicht des die Haftreibung bestimmenden Kornanteils des Quarzsandes 15 bis 25 %, vorzugsweise 18 %, des Gesamtgewichtes der Mischung ausmacht.

5. Fugenmasse nach einem der Ansprüche 1 bis 4, dadurch gekennzeichnet, daß die Trockenkomponente einen Gewichtsanteil von 50 bis 70 %, vorzugsweise von 60 bis 65 %, der Gesamtmischung aufweist.
